# DEMANDE DE BREVET EUROPEEN

(11) **EP 4 293 560 A1**
(43) Date de publication de la demande: **20.12.2023**
(21) Numéro de dépôt: 23176261.8
(22) Date de dépôt: 31.05.2023
(51) Int. Cl.: G06F 21/64, H04L 9/40

(54) **UNITÉ DE COMMANDE ÉLECTRONIQUE ADAPTÉE À DES COMMUNICATIONS DE SYSTÈME DE TRANSPORT INTELLIGENT ET PROCÉDÉ CORRESPONDANT**

(30) Priorité: 13.06.2022 FR 2205653
(71) Demandeur: STMicroelectronics (Rousset) SAS, 13790 Rousset (FR)
(72) Inventeur: TABARIES, Laurent, 13400 Aubagne (FR)
(74) Mandataire: Casalonga

(57) **Abrégé**

L'unité de commande électronique (ECU) comprend un circuit de communication (MDM) adapté pour recevoir des messages (INC_MSS) du type système de transport intelligent (ITS), un circuit d'authentification (HSM) adapté pour authentifier les messages reçus, une mémoire non-volatile (NVM, sNVM) configurée pour enregistrer les messages reçus authentifiés (ATH_DAT), et un élément sécurisé (eSE). L'élément sécurisé (eSE) comporte une liste noire d'émetteurs exclus d'office (BL) et est configuré pour rejeter directement un message reçu provenant d'un émetteur de la liste noire (BL), sans authentification par le circuit d'authentification (HSM) ; ou l'élément sécurisé (eSE) comporte une liste blanche d'émetteurs admis d'office (WL) et est configuré pour enregistrer directement un message reçu provenant d'un émetteur de la liste blanche (WL) dans la mémoire non-volatile (NVM, sNVM), sans authentification par le circuit d'authentification (HSM).

## Description

Des modes de réalisation et de mise en oeuvre concernent les unités de commande électroniques « ECU » (acronymes des termes anglais usuels « Electronic Control Unit »), typiquement destinées à l'équipement électronique automobile, adaptées pour communiquer dans un système du type système de transport intelligent.

Le système de transport intelligent (usuellement désigné par l'acronyme « ITS » des termes anglais « Intelligent Transport System ») est la dénomination des technologies électroniques et informatiques dans le domaine des transports routiers et de la logistique, notamment pour des automobiles personnelles.

Le système de transport intelligent ITS est prévu pour gérer numériquement la régulation du trafic automobile, gérant les échanges de messages communiqués entre les voitures « C2X » (pour « Car to everything » en anglais) encore appelé « V2X » (pour « Vehicule to everything »), et d'autres voitures ou des infrastructures (feux de signalisation, ronds-points, etc.) équipés du système de transport intelligent ITS. Les messages C2X sont notamment des messages de sécurité de base « BSM » (acronyme des termes anglais « Basic Safety Message ») communiquant des alertes météo, les alertes de voitures arrêtées ou d'accidents, de dysfonctionnement de signalétique, etc.

Les messages C2X sont reçus à la volée, analysés et stockés dans une mémoire non-volatile typiquement d'usage générale, usuellement une mémoire « Flash », de l'unité de commande électronique. En outre, pour se prémunir contre le risque de corruption des données stockées dans la mémoire, par exemple un « piratage » de la mémoire pour accéder à des informations ou des clés sensibles ou secrètes, il est prévu que les messages C2X aient une durée de vie très courte, et que leurs envois soient renouvelés très fréquemment.

Ainsi, dans le système de transport intelligent ITS, il existe un objectif de traitement en réception d'un millier (1000) de messages reçus par secondes. Les unités de commande électroniques actuelles adaptées aux communications ITS ne sont pas capables d'atteindre cet objectif de traitement en réception.

En effet, pour assurer la confiance des communications du type ITS, une signature numérique de l'émetteur est typiquement prévue dans les messages C2X. La signature numérique utilise classiquement des infrastructures à clés publiques « PKI » (acronyme des termes anglais usuels « Public Key Infrastructure ») et des algorithmes de signature du type « DSA_256 » ou « ECDSA_256 » (acronymes des termes anglais « Digital Signature Algorithm » et respectivement « Elliptic Curve DSA » désignant des techniques bien connues de l'homme de l'art). Ainsi, pour chaque message entrant, une vérification cryptographique de la signature ECDSA_256 est exécutée afin d'authentifier le message reçu avant son stockage en mémoire.

Les procédures d'authentification, notamment du type ECDSA_256, demandent typiquement une grande quantité de ressources de calcul et sont relativement longues à mettre en oeuvre.

En conséquence, lorsque l'unité de commande électronique reçoit trop de messages, un phénomène de « goulot d'étranglement » dans le traitement des messages reçus peut se produire, et ralentir la bande passante en réception bien en dessous de l'objectif susmentionné.

Le problème devrait s'aggraver au fur et à mesure que les voitures et les infrastructures seront équipées pour le système de transport intelligent ITS.

Les propositions classiques de solutions à ce problème sont d'augmenter la capacité de traitement des unités de commande électroniques. Cela étant, l'augmentation de la capacité de traitement augmente également la consommation d'énergie, la taille et le prix des circuits intégrés des unités de commande électroniques destinées à l'automobile.

Ainsi, il existe un besoin d'éviter de devoir utiliser des circuits intégrés plus performants (et donc plus grands, plus chers et plus énergivores), pour répondre à la demande élevée de bande passante, tout en bénéficiant d'une sécurité et d'une confiance meilleures.

Selon un aspect, il est proposé à cet égard une unité de commande électronique comprenant un circuit de communication adapté pour recevoir des messages du type système de transport intelligent, un circuit d'authentification adapté pour authentifier les messages reçus, une mémoire non-volatile configurée pour enregistrer les messages reçus authentifiés, et un élément sécurisé. L'élément sécurisé comporte une première liste d'émetteurs exclus d'office et l'unité de commande électronique est configurée pour rejeter directement un message reçu provenant d'un émetteur de la première liste, sans procéder à l'authentification de ce message par le circuit d'authentification ; et, en alternative ou en combinaison, l'élément sécurisé comporte une deuxième liste d'émetteurs admis d'office et l'unité de commande électronique est configurée pour enregistrer directement un message reçu provenant d'un émetteur de la deuxième liste dans la mémoire non-volatile, sans procéder à l'authentification de ce message par le circuit d'authentification.

Ainsi, le rejet direct d'un message reçu, c'est à dire que le message n'est ni traité ni enregistré, est très rapide et permet de ne pas engorger le système en cas de grand nombre de messages reçus. De même, l'enregistrement direct d'un message reçu est très rapide et permet de ne pas engorger le système en cas de grand nombre de messages reçus, y compris des messages de renouvellement à une fréquence élevée.

En outre, le risque d'extraction ou de modification des données de la première liste et de la deuxième liste est extrêmement faible, étant donné qu'elles bénéficient de la sécurité de l'élément sécurisé. En conséquence, les traitements (rejet ou enregistrement) directs des messages provenant d'émetteurs présents sur lesdites listes restent fiables malgré l'absence d'authentification.

En particulier, l'élément sécurisé peut avantageusement comporter des moyens de protections matérielles adaptés pour une certification au minimum « EAL4+ » ou supérieure (par exemple « EAL5+ », voire « EAL6+ »).

Selon un mode de réalisation, l'élément sécurisé est configuré pour modifier la première liste d'émetteurs exclus d'office ou la deuxième liste d'émetteurs admis d'office sur commande transmise sur un canal sécurisé par un serveur ayant autorité.

Cela permet d'adapter dynamiquement les listes d'émetteurs exclus ou admis d'office, de manière fiable et sécurisée.

Selon un mode de réalisation, le circuit de communication est adapté à des communications sans fil selon le protocole de la norme IEEE 802.11.p (appelé aussi « G5 ») ou selon le protocole 5G.

Selon un mode de réalisation, ladite mémoire non-volatile n'est pas matériellement sécurisée.

Selon un mode de réalisation, ladite mémoire non-volatile est matériellement sécurisée, l'élément sécurisé comportant ladite mémoire non-volatile matériellement sécurisée et un compteur d'horloge toujours actif (par exemple actif même dans des mode de fonctionnement du type très basse consommation), l'élément sécurisé étant configuré pour attribuer aux messages reçus et authentifiés une donnée d'horodatage issue dudit compteur d'horloge, et pour enregistrer lesdits messages reçus authentifiés et les données d'horodatages respectives dans la mémoire non-volatile matériellement sécurisée.

Ce mode de réalisation présente notamment l'avantage d'augmenter la durée de vie des messages stockés et de réduire d'autant le nombre de traitements des messages de renouvellements systématiques, du fait que les messages authentifiés bénéficient de la protection matérielle de la mémoire non-volatile matériellement sécurisée. La donnée d'horodatage permet une gestion de la durée de vie, plus longue, des messages de manière sécurisée et parfaitement fiable.

Par ailleurs, en ce qui concerne ce mode de réalisation, l'homme du métier pourra, à toutes fins utiles, se référer à la demande de brevet français ayant pour titre « Procédé de gestion de communications de système de transport intelligent et unité de commande électronique correspondante » déposée le même jour et par le même demandeur que la présente demande.

Selon un autre aspect, il est proposé un procédé de gestion de communications du type système de transport intelligent comprenant une réception d'un message, une authentification du message reçu, et un enregistrement du message reçu authentifié dans une mémoire non-volatile d'une unité de commande électronique, dans lequel le message reçu est directement rejeté, sans avoir procédé à ladite authentification de ce message, s'il provient d'un émetteur d'une première liste d'émetteurs exclus d'office contenue dans un élément sécurisée de l'unité de commande électronique ; ou le message reçu est directement enregistré dans la mémoire non-volatile, sans avoir procédé à ladite authentification de ce message, s'il provient d'un émetteur d'une deuxième liste d'émetteurs admis d'office contenue dans l'élément sécurisée.

Selon un mode de mise en oeuvre, une modification de la première liste d'émetteurs exclus d'office ou de la deuxième liste d'émetteurs admis d'office est effectuée sur commande transmise sur un canal sécurisé par un serveur ayant autorité.

Selon un mode de mise en oeuvre, les communications sont des communications sans fil selon le protocole de la norme IEEE 802.11.p (ou « G5 ») ou selon le protocole 5G.

Selon un mode de mise en oeuvre, ladite mémoire non-volatile n'est pas matériellement sécurisée.

Selon un mode de mise en oeuvre, le procédé comprend une attribution aux messages reçus et authentifiés d'une donnée d'horodatage issue d'un compteur d'horloge toujours actif appartenant à l'élément sécurisé, et un enregistrement desdits messages reçus authentifiés et des données d'horodatages respectives dans la mémoire non-volatile, ladite mémoire non-volatile étant matériellement sécurisée et appartenant à l'élément sécurisé.

D'autres avantages et caractéristiques de l'invention apparaîtront à l'examen de la description détaillée de modes de réalisation et de mise en oeuvre, nullement limitatifs, et des dessins annexés, sur lesquels :
[Fig 1] ;
[Fig 2] ;
[Fig 3] ;

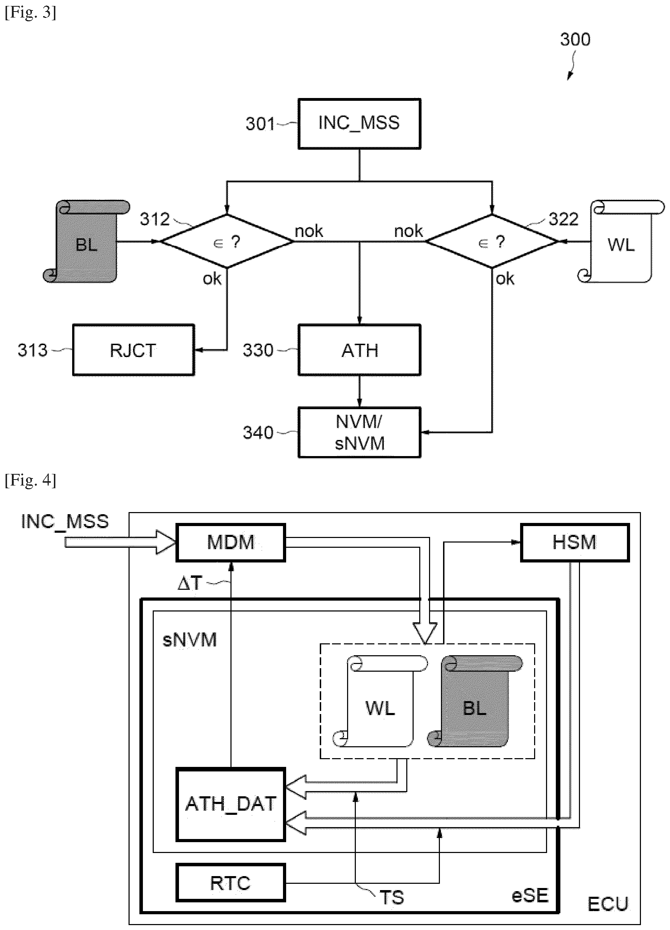

[Fig 4] illustrent des modes de réalisation et de mise en oeuvre de l'invention.

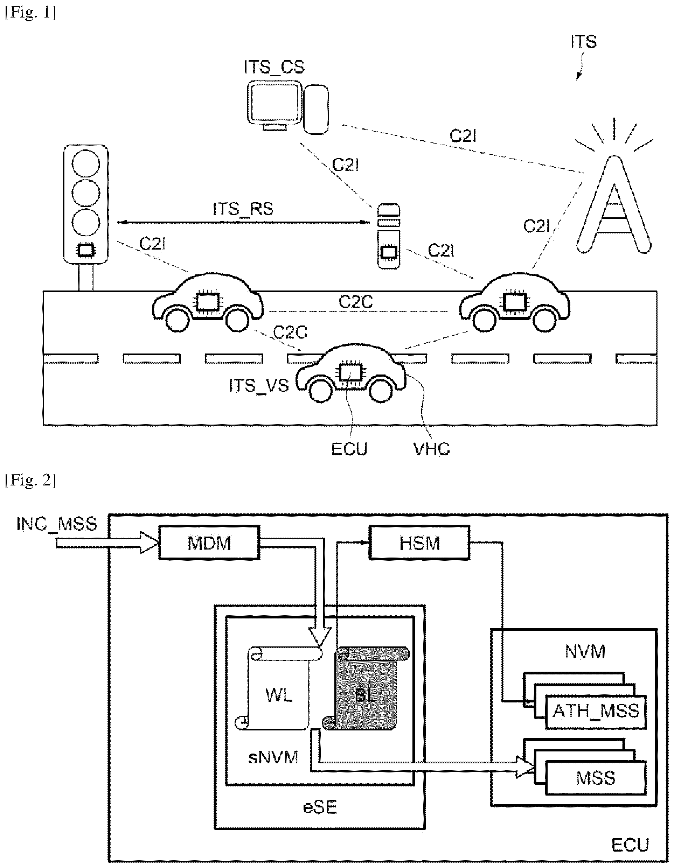

La figure 1 illustre un exemple de système de transport intelligent ITS.

Le système de transport intelligent ITS comporte un réseau de stations de véhicules ITS_VS, de stations d'infrastructure de chaussée ITS_RS, et d'au moins une station centrale ITS_CS. Les véhicules VHC, tels que des automobiles, des poids-lourds, des deux-roues, etc, sont des stations ITS_VS du système ITS et peuvent communiquer avec les stations de véhicules ITS_VS avoisinante par des messages C2C (tiré des termes anglais « car to car »). Les stations de véhicules ITS_VS peuvent également communiquer avec les stations d'infrastructures de chaussée ITS-RS avoisinantes, telles que des éléments de signalisation routière (feux tricolore, bornes kilométriques, etc) par des messages C2I (tiré des termes anglais « car to infrastructure »), et aussi avec la station centrale ITS_CS par des messages C2I via un réseau de télécommunication ou via les stations d'infrastructure de chaussée ITS_RS. Les messages généraux C2I, C2C sont aussi désigné par l'abréviation C2X (tiré des termes anglais « car to everything »).

Les messages C2X sont notamment des messages de sécurité de base « BSM » (acronyme des termes anglais « Basic Safety Message ») communiquant des alertes météo, les alertes de voitures arrêtées ou d'accidents, des alertes de dysfonctionnement de signalétique, etc. Les messages C2X sont communiquées par un protocole de communication sans fil, en particulier le protocole de la norme IEEE 802.11p traitant des accès sans fil dans les environnements de véhicules « WAVE » (pour « Wireless Access to Vehicular Environment » en anglais) également désigné « G5 » ou « ITS-G5 ». Les messages C2X peuvent aussi être communiquées par le protocole « 5G » par exemple tel que défini dans la norme de l'institut européen des normes de télécommunications « ETSI F5G » (pour « European Telecommunications Standards Institute » en anglais).

Les différentes stations du système de transport intelligent ITS, en particulier les stations du type « objet connecté » ITS_RS, ITS_VS (c'est-à-dire les stations autres que la station centrale ITS_CS), comportent des unités de commande électroniques ECU (usuellement en anglais « Electronic Control Unit »), typiquement destinées à l'équipement électronique automobile, adaptées pour mettre en oeuvre les communication « C2X » (C2C, C2I) dans le système de transport intelligent ITS.

On se réfère à cet égard à la figure 2.

La figure 2 illustre une unité de commande électronique ECU tel que mentionnée en relation avec la figure 1.

L'unité de commande électronique ECU peut appartenir à un véhicule terrestre à moteur VHC tel qu'une automobile, un poids-lourd, un deux-roues ou à un dispositif d'infrastructure de chaussé tel qu'un feu tricolore, une borne kilométrique, un panneau de signalisation, un panneau d'information ou de publicité, une borne d'appel d'urgence, ou autres.

L'unité de commande électronique ECU comprend un circuit de communication MDM, typiquement un « modem », adapté à des communications sans fil selon le protocole de la norme IEEE 802.11p, ou selon le protocole 5G, tels que mentionnés ci-avant. En particulier, le circuit de communication MDM est apte à recevoir des messages INC_MSS (C2X) en provenance du système de transport intelligent ITS.

L'unité de commande électronique ECU comprend un circuit d'authentification HSM adapté pour authentifier les messages reçus INC_MSS. Par exemple, le circuit d'authentification HSM est capable de déchiffrer une signature numérique de l'émetteur du message INC_MSS. La signature numérique est typiquement encodée dans le message INC_MSS par un algorithme de signature à 256 bits du type « DSA_256 » ou « ECDSA_256 » (acronymes des termes anglais « Digital Signature Algorithm » et respectivement « Elliptic Curve DSA »). Ainsi, pour les messages entrants INC_MSS, une vérification cryptographique de la signature ECDSA_256 peut être exécutée par le circuit d'authentification HSM.

L'unité de commande électronique ECU comprend typiquement une mémoire non-volatile NVM d'usage général, telle qu'une mémoire Flash. La mémoire non-volatile d'usage général NVM n'est pas nécessairement sécurisée matériellement, en effet les dispositifs dits « d'usage général » ne sont typiquement pas sécurisés, ou du moins ont une certification « EAL » de niveau inférieur à celui de l'élément sécurisé eSE (voir ci-après). Classiquement, tous les messages reçus INC_MSS sont enregistrés dans la mémoire d'usage général NVM, après avoir été authentifiés ATH_MSS. Cela étant, dans le cas classique, pour limiter le risque d'extraction des données de la mémoire NVM, les messages enregistrés ont une durée de vie très courte, et doivent être renouvelées régulièrement, avec la vérification cryptographique de la signature à chaque renouvellement. Cette mise en oeuvre classique n'est pas avantageuse, notamment en matière de consommation énergétique et d'utilisation des ressources calculatoire du circuit d'authentification HSM.

Or, l'unité de commande électronique ECU comprend un élément sécurisé eSE comportant une première liste BL d'émetteurs exclus d'office, usuellement nommée « liste noire », et, en combinaison ou en alternative, une deuxième liste d'émetteurs admis d'office WL usuellement nommée « liste blanche », par exemple enregistrés dans une mémoire non-volatile matériellement sécurisée sNVM. Et, l'unité de commande électronique ECU est configurée pour rejeter directement un message reçu provenant d'un émetteur de la liste noire BL, sans authentification par le circuit d'authentification HSM, et, respectivement, pour enregistrer directement un message reçu MSS provenant d'un émetteur de la liste blanche WL, dans la mémoire non-volatile NVM, sNVM, sans authentification par le circuit d'authentification HSM.

Il est en effet possible d'identifier l'émetteur d'un message sans mettre en oeuvre le traitement d'authentification par le circuit d'authentification HSM. Ainsi, la procédure de rejet direct d'un message reçu provenant d'un émetteur identifié dans la liste noire BL est très rapide et permet de ne pas engorger le système en cas de grand nombre de messages reçus. Un rejet direct d'un message reçu correspond simplement à ne pas traiter ni enregistrer le message.

De même, la procédure d'enregistrement direct MSS d'un message reçu provenant d'un émetteur identifié dans la liste blanche WL est très rapide et permet de ne pas engorger le système en cas de grand nombre de messages reçus, y compris des messages de renouvellement à une fréquence élevée.

Par exemple, l'élément sécurisé eSE est « sécurisé » en ce qu'il comporte des protections matérielles telles que des moyens de bouclier actif, de surveillance des paramètres environnementaux, de protection contre les injections de fautes, de protection contre les attaques par canal latéral, ou d'autres moyens. De manière plus générale, l'élément sécurisé comporte des protections matérielles aptes à obtenir une certification de critères communs « EAL4+ » ou « EAL5+ » (acronyme des termes « Evaluation Assurance Level 4+/5+ ») c'est-à-dire une assurance d'évaluation de niveau 4 ou 5 selon des critères communs, typiquement définis dans les normes ISO-15408. La certification peut être obtenue par exemple en satisfaisant à une analyse méthodique avancée des vulnérabilités de classe 5 « AVA_VAN5 » (pour « Vulnerability Assessment » et « Vulnerability Analysis ») desdits critère communs.

Ainsi, l'élément sécurisé eSE est sensiblement « inviolable » (c'est-à-dire inviolable dans la mesure de sa certification), et le risque d'extraction ou de modification des données de la liste noire BL et de la liste blanche WL est extrêmement faible. En conséquence, les traitements immédiats (rejet direct ou enregistrement direct) des messages provenant d'émetteurs présents sur lesdites listes BL, WL restent fiables malgré l'absence d'authentification.

En outre, l'élément sécurisé eSE est avantageusement configuré pour modifier la liste noire d'émetteurs exclus d'office BL et la liste blanche d'émetteurs admis d'office WL sur commande transmise sur un canal sécurisé par un serveur ayant autorité pour effectuer cette modification.

Par exemple, le canal sécurisé peut être mis en oeuvre par une connexion sécurisée de bout en bout par un protocole de canal sécurisé « Secure Channel Protocol » de la norme « Global Platform », par exemple selon les protocoles « SCP11.a », « SCP11.b », « SCP11.c » ou encore « SCP03 ».

Par exemple, le serveur ayant autorité pour effectuer une modification dans la liste noire BL et dans la liste blanche WL peut être un serveur de la station centrale ITS_CS du système de transport intelligent ITS, ou un serveur appartenant au vendeur du véhicule VHC, ou un serveur appartenant à l'autorité publique. Par exemple, à cet égard, l'élément sécurisé eSE intègre, à sa fabrication, des certificats d'autorités désignant les serveurs autorisés à effectuer une modification dans la liste noire BL et dans la liste blanche WL.

Ainsi, la liste noire BL peut être dynamiquement adaptée pour y ajouter de nouveaux acteurs frauduleux, et la liste blanche peut être dynamiquement adaptée pour y inclure de nouveaux acteurs de confiance, ou par exemple en cas d'incident nécessitant un traitement privilégié des messages provenant d'un émetteur particulier.

Enfin, si un message reçu INC_MSS provient d'un émetteur qui n'est présent ni dans la liste noire BL ni dans la liste blanche WL, alors le circuit d'authentification HSM effectue l'authentification du message reçu INC_MSS typique, c'est-à-dire la vérification cryptographique de la signature du message. Les messages authentifiés ATH_MSS sont enregistrés dans la mémoire non-volatile d'usage général NVM.

La figure 3 illustre un procédé 300 correspondant à la gestion des communications du système de transport intelligent ITS, mise en oeuvre par l'unité de commande électronique ECU décrite en relation avec la figure 2.

Ainsi, le procédé 300 commence avec une réception 301 d'un message INC_MSS.

Une étape 312 vérifie si le message reçu INC_MSS provient d'un émetteur appartenant à la liste noire d'émetteurs exclus d'office BL.

Dans l'affirmative « ok », le procédé passe à une étape 313 de rejet direct RJCT du message reçu INC_MSS.

Dans la négative « nok », une étape 330 d'authentification ATH du message reçu est mise en oeuvre, telle que décrit précédemment en relation avec le circuit d'authentification HSM.

Si le message est authentifié, le procédé comprend une étape 340 d'enregistrement du message reçu authentifié dans la mémoire non-volatile NVM, ou éventuellement dans la mémoire non-volatile matériellement sécurisée sNVM appartenant à l'élément sécurisé eSE.

Une étape 322 vérifie si le message reçu INC_MSS provient d'un émetteur appartenant à la liste blanche d'émetteurs admis d'office BL.

Dans l'affirmative « ok », le procédé passe directement à l'étape 340 d'enregistrement du messages reçus dans la mémoire non-volatile NVM/sNVM, sans mettre en oeuvre l'authentification 330.

Dans la négative « nok », le procédé passe à l'étape 330 d'authentification ATH, puis à l'étape 340 d'enregistrement du message reçu dans la mémoire non-volatile NVM si le message est authentifié.

L'une ou l'autre des étapes de vérification 312 et 322 est effectuée en fonction de l'usage de l'une ou l'autre, respectivement, de la liste noire BL et de la liste blanche WL. En cas d'usage à la fois de la liste noire BL et de la liste blanche WL, les étapes de vérification respectives 312 et 322 peuvent être effectuée simultanément, ou subséquemment, c'est-à-dire que l'une quelconque des vérifications 312 ; 322 est faite en cas de résultat négatif « nok » de l'autre vérifications 322 ; 312.

Par ailleurs, l'invention n'est pas limitée à ces modes de réalisation et de mise en oeuvre mais en embrasse toutes les variantes, par exemple :
1- En référence à la figure 4, il est proposé selon un aspect de combiner la technique décrite précédemment en relation avec les figures 1 à 3 (les éléments communs supportent les mêmes références et ne sont pas tous détaillés à nouveau ici) avec une technique du type de celle décrite dans la demande de brevet français ayant pour titre « Procédé de gestion de communications de système de transport intelligent et unité de commande électronique correspondante » déposée le même jour et par le même demandeur que la présente demande. En détails, cette technique comprend d'une part une utilisation de la mémoire non-volatile matériellement sécurisée (de niveau EAL4+ ou supérieur) pour stocker les messages INC_MSS ; et d'autre part une attribution aux messages enregistrés dans la mémoire non-volatile sécurisée sNVM d'une donnée d'horodatage issue d'un compteur d'horloge toujours actif RTC appartenant à l'élément sécurisé eSE. Ainsi, les messages reçus provenant d'un émetteur de la liste blanche WL, ou les messages reçus et authentifiés (c'est-à-dire les messages reçus provenant d'un émetteur absent de la liste noire BL et absence de la liste blanche WL) sont enregistrés dans la mémoire non-volatile matériellement sécurisée sNVM avec la donnée d'horodatage respective. En particulier, le compteur d'horloge toujours actif RTC est avantageusement configuré pour générer une valeur courante d'une base de temps de référence, dans un mode de fonctionnement en veille et dans un mode de fonctionnement actif de l'élément sécurisé eSE.
   Le fait de stocker les messages dans la mémoire non-volatile matériellement sécurisée permet d'augmenter la durée de vie ΔT des messages stockés (commençant à courir à partir de la donnée d'horodatage), et ainsi de réduire d'autant le nombre de traitements et enregistrements des messages de renouvellements systématiques. La valeur d'horodatage permet une gestion de la durée de vie ΔT, plus longue, des messages de manière sécurisée et parfaitement fiable.
2- Selon un autre aspect, il est également proposé un véhicule terrestre à moteur incorporant une unité de commande électronique ECU telle que décrite précédemment en relation avec les figures 1 à 4.
3- Selon un autre aspect, il est également proposé un dispositif d'infrastructure de chaussée incorporant une unité de commande électronique ECU telle que décrite précédemment en relation avec les figures 1 à 4.

## Revendications

1. Unité de commande électronique (ECU) comprenant un circuit de communication (MDM) adapté pour recevoir des messages (INC_MSS) du type système de transport intelligent (ITS), un circuit d'authentification (HSM) adapté pour authentifier les messages reçus, une mémoire non-volatile (NVM, sNVM) configurée pour enregistrer les messages reçus authentifiés (ATH_DAT), et un élément sécurisé (eSE), dans laquelle l'élément sécurisé (eSE) comporte une première liste d'émetteurs exclus d'office (BL) et l'unité de commande électronique (ECU) est configurée pour rejeter directement un message reçu provenant d'un émetteur de la première liste (BL), sans procéder à l'authentification de ce message par le circuit d'authentification (HSM) ; ou l'élément sécurisé (eSE) comporte une deuxième liste d'émetteurs admis d'office (WL) et l'unité de commande électronique (ECU) est configurée pour enregistrer directement un message reçu provenant d'un émetteur de la deuxième liste (WL) dans la mémoire non-volatile (NVM, sNVM), sans procéder à l'authentification de ce message par le circuit d'authentification (HSM).

2. Unité de commande électronique selon la revendication 1, dans laquelle l'élément sécurisé (eSE) est configuré pour modifier la première liste d'émetteurs exclus d'office (BL) ou la deuxième liste d'émetteurs admis d'office (WL) sur commande transmise sur un canal sécurisé par un serveur ayant autorité.

3. Unité de commande électronique selon l'une des revendications 1 ou 2, dans laquelle le circuit de communication (MDM) est adapté à des communications sans fil selon le protocole de la norme IEEE 802.11.p ou selon le protocole 5G.

4. Unité de commande électronique selon l'une des revendications 1 à 3, dans laquelle ladite mémoire non-volatile (NVM) n'est pas matériellement sécurisée.

5. Unité de commande électronique selon l'une des revendications 1 à 3, dans laquelle ladite mémoire non-volatile (sNVM) est matériellement sécurisée, l'élément sécurisé (eSE) comportant ladite mémoire non-volatile matériellement sécurisée (sNVM) et un compteur d'horloge toujours actif, l'élément sécurisé (eSE) étant configuré pour attribuer aux messages reçus et authentifiés une donnée d'horodatage issue dudit compteur d'horloge, et pour enregistrer lesdits messages reçus authentifiés et les données d'horodatages respectives dans la mémoire non-volatile matériellement sécurisée (sNVM).

6. Procédé de gestion de communications (300) du type système de transport intelligent (ITS) comprenant une réception (301) d'un message (INC_MSS), une authentification (330) du message reçu, et un enregistrement (340) du message reçu authentifié dans une mémoire non-volatile (NVM, sNVM) d'une unité de commande électronique (ECU), dans lequel le message reçu (INC_MSS) est directement rejeté (313), sans avoir procédé à ladite authentification (330) de ce message, s'il provient d'un émetteur d'une première liste d'émetteurs exclus d'office (BL) contenue dans un élément sécurisée (eSE) de l'unité de commande électronique (ECU) ; ou le message reçu (INC_MSS) est directement enregistré (340) dans la mémoire non-volatile (NVM, sNVM), sans avoir procédé à ladite authentification (330) de ce message, s'il provient d'un émetteur d'une deuxième liste d'émetteurs admis d'office (WL) contenue dans l'élément sécurisée (eSE).

7. Procédé selon la revendication 6, dans lequel une modification de la première liste d'émetteurs exclus d'office (BL) ou de la deuxième liste d'émetteurs admis d'office (WL) est effectuée sur commande transmise sur un canal sécurisé par un serveur ayant autorité.

8. Procédé selon l'une des revendications 6 ou 7, dans lequel les communications (301) sont des communications sans fil selon le protocole de la norme IEEE 802.11.p ou selon le protocole 5G.

9. Procédé selon l'une des revendications 6 à 8, dans laquelle ladite mémoire non-volatile (NVM) n'est pas matériellement sécurisée.

10. Procédé selon l'une des revendications 6 à 8, comprenant une attribution aux messages reçus et authentifiés d'une donnée d'horodatage issue d'un compteur d'horloge toujours actif appartenant à l'élément sécurisé (eSE), et un enregistrement desdits messages reçus authentifiés et des données d'horodatages respectives dans la mémoire non-volatile (sNVM), ladite mémoire non-volatile (sNVM) étant matériellement sécurisée et appartenant à l'élément sécurisé (eSE).
